# EUROPÄISCHE PATENTANMELDUNG

(11) **EP 1 788 274 A2**
(43) Veröffentlichungstag der Anmeldung: **23.05.2007**
(21) Anmeldenummer: 06022984.6
(22) Anmeldetag: 04.11.2006
(51) Int. Cl.: F16F 9/02

(54) **Stufenlos blockierbare Verstellvorrichtung**

(30) Priorität: 18.11.2005 DE 102005055015
(71) Anmelder: Stabilus GmbH, D-56070 Koblenz (DE)
(72) Erfinder: Schoppet, Jörg, 55457 Gensingen (DE)
(74) Vertreter: Klein, Thomas

(57) **Zusammenfassung**

Stufenlos blockierbare Verstellvorrichtung 1, insbesondere Gasfeder, mit einem zylinderförmigen Gehäuse 3 mit einer Mittellängsachse 2, mit einer an einem Ende des Gehäuses abgedichtet herausgeführten, axial verschiebbar in dem Gehäuse 3 angeordneten Kolbenstange 4, deren in das Gehäuse ragendes Ende fest mit einem in dem Gehäuse axial verschiebbaren Kolben 5 verbunden ist, der das Gehäuse 3 in eine erste und eine zweite Arbeitskammer 15, 16 unterteilt und mit einem einen Ventilsitz 21 und ein Schließglied 19 umfassenden Ventilkörper 8, der mit einem Übertragungselement 22 eine Blockiervorrichtung 7 bildet, die bei Betätigung des Übertragungselements 22 die erste Arbeitskammer 15 mit der zweiten Arbeitskammer 16 durch Abheben des Schließgliedes 19 von dem Ventilsitz 21 verbindet, wobei das Übertragungselement 22 quer zur Mittelängslachse 2 des Gehäuses 3 verschiebbar gelagert ist.

## Beschreibung

Die vorliegende Erfindung betrifft eine stufenlos blockierbare Verstellvorrichtung, insbesondere Gasfeder, mit einem im Wesentlichen zylinderförmigen Gehäuse mit einer Mittellängsachse, mit einer am anderen Ende des Gehäuses abgedichtet herausgeführten, axial verschiebbar in dem Gehäuse angeordneten Kolbenstange, deren in das Gehäuse ragendes Ende fest mit einem in dem Gehäuse axial verschiebbaren Kolben verbunden ist, der das Gehäuse in eine erste und eine zweite Arbeitskammer unterteilt, mit einem einen Ventilsitz und ein Schließglied umfassenden Ventilkörper, der mit einem Übertragungselement eine Blockiervorrichtung bildet, die bei Betätigung des Übertragungselements die erste Arbeitskammer mit der zweiten Arbeitskammer durch Abheben des Schließgliedes von dem Ventilsitz verbindet.

Derartige Verstellvorrichtungen werden häufig in Form von Gasfedern innerhalb einer Säule, beispielsweise bei Stuhlsäulen oder Tischhöhenverstellungen, verwendet. An der Verstellvorrichtung ist dann ein Sitzträger oder eine Tischplatte angebracht, die ein Auslösemittel, meist in Form eines Hebels, aufweisen, mit dem die Blockierung einer Blockiervorrichtung aufgehoben wird und somit eine Längenverstellung der Verstellvorrichtung ermöglicht wird. Da die Deblockierung der Blockierungsvorrichtung nur dann möglich ist, wenn die Verstellvorrichtung in einer definierten Ausrichtung zum Sitzträger oder der Tischplatte angeordnet ist, mussten Verstellvorrichtungen entwickelt werden, bei denen die Ausrichtung der Verstellvorrichtung zu dem Sitzträger oder zu der Tischplatte keine Rolle spielt.

Hierzu zeigt die JP 2002-235789 eine Blockiervorrichtung mit einem Ventilkörper und einem Schließglied, die in einem zylindrischen Bereich einer Verstellvorrichtung angeordnet ist. An den zylindrischen Bereich schließt sich ein konisch ausgebildeter Bereich an, in dem eine Betätigungsmechanik angeordnet ist, die sich aus einer zylindrischen Hülse, einem in der Hülse axial verschieblich angeordneten Schieber und einem Kipphebel gebildet wird. Die Hülse ist mit einer Mutter verschlossen, durch die der Kipphebel hindurch nach außen ragt, um von einem Auslösemittel ergriffen und umgekippt werden zu können. Dabei wird der Kipphebel auch in Richtung Blockiervorrichtung bewegt und verschiebt den Schieber in die gleiche Richtung zur Blockiervorrichtung hin. Dadurch wird das Schließglied vom Ventilsitz abgehoben, die Blockierung aufgehoben und die Länge der Verstellvorrichtung kann geändert werden.

Die DE 101 31 523 B4 offenbart ein ähnliches Prinzip, jedoch wird auf den in axialer Richtung verschiebbaren Schieber verzichtet. Dadurch wirkt der Kipphebel direkt auf das Schließglied der Blockiervorrichtung.

Nachteilig bei diesem beiden Lösungsvorschlägen ist jedoch, dass einerseits viel Bauraum für die Mechanik benötigt wird, den man lieber für eine größere Hublänge verwenden würde und dass sich andererseits der Kipphebel in die Verstellvorrichtung hineinbewegt.

Aus der DE 196 04 962 A1 ist eine Verstellvorrichtung bekannt, bei der das Schließglied einer Blockiervorrichtung in eine Schrägstellung gebracht werden kann, um die Dichtwirkung einer Dichtung aufzuheben.

Auch bei diesem Vorschlag wird viel Bauraum in die Auslösemechanik der Blockiervorrichtung investiert. Ferner ist es sehr nachteilig, dass zum Lösen der Blockiervorrichtung die Dichtungen mechanisch belastet werden und dass das aus der Verstellvorrichtung nach außen geführte Schließglied bei seiner Betätigung etwas in die Verstellvorrichtung hineintaucht.

Die gleichen Nachteile sind aus der EP 1 291 546 A1 bekannt. Auch hier wird das Schließglied einer Blockiervorrichtung in eine Schrägstellung gebracht, um die Dichtwirkung einer Dichtung aufzuheben.

Aufgabe der vorliegenden Erfindung ist es daher, eine stufenlos blockierbare Verstellvorrichtung mit einer Blockiervorrichtung zu schaffen, die eine einfache Montage eines zu tragenden Objektes unabhängig von der axialen Ausrichtung des Objekts zur Verstellvorrichtung bei gleichzeitiger Ausnutzung der optimalen Hublänge erlaubt.

Erfindungsgemäß wird die Aufgabe dadurch gelöst, dass das Übertragungselement quer zur Mittelachse des Gehäuses verschiebbar gelagert ist.

In vorteilhafter Weise ist die gesamte Blockiervorrichtung im Bereich des Konus innerhalb des Gehäuses angeordnet, wodurch eine optimale Bauraumnutzung erreicht wird.

Damit das Übertragungselement leicht mit einem Auslösemittel eines von der Verstellvorrichtung getragenen Objekts, beispielsweise ein Sitzträger eines Stuhls oder eine Tischplatte, ergriffen und in radialer Richtung verschoben werden kann, umfasst das Übertragungselement in vorteilhafter Weise einen scheibenartigen Grundkörper und einen an dem Grundkörper angeordneten Schaft, wobei das Übertragungselement im unbetätigten Zustand konzentrisch zur Mittellängsachse des Verstellelements angeordnet ist und bei Betätigung durch das Auslösemittel in radialer Richtung zu Mittellängsachse bewegt wird.

Bei einer weiteren Ausgestaltung ist an der dem Schaft entgegengesetzten Seite des Übertragungselements eine Vertiefung angeordnet, in die das dem Ventilsitz entgegengesetzte Ende des Schließglieds mit einer der Vertiefung entsprechenden kegelartigen Kontur eingreift. Wird das Übertragungselement radial verschoben, überstreicht ein bestimmter Bereich der trichterförmigen Vertiefung einen bestimmten Bereich der kegelartigen Kontur des Schließglieds und das Schließglied wird derart bewegt, dass es vom Ventilsitz abhebt, wodurch der Fluidenfluss und somit die stufenlose Verstellung der Verstellvorrichtung ermöglicht wird.

Bei einer alternativen Ausführungsform weist das dem Ventilsitz entgegengesetzte Ende des Schließgliedes eine sphärische Kontur auf, wodurch eine andere Krafteinleitung auf das Schließglied erreicht wird.

Bei einer weiteren vorteilhaften Ausgestaltung ist das Übertragungselement zwischen dem Ventilkörper und einem Halteelement angeordnet.

Dazu kann bei einer Ausführungsform jeweils das Halteelement auf der dem Ende des Gehäuses abgewandten Seite und der Ventilkörper auf der der ersten Arbeitskammer abgewandten Seite ein Gewinde aufweisen und das Halteelement auf den Ventilkörper aufgeschraubt werden.

Bei einer alternativen Ausführungsform kann das Halteelement mit Rastvorsprüngen versehen sein, die in entsprechende Rastnuten des Ventilkörpers eingreifen.

Auf diese Weise können der Ventilkörper und das Übertragungselement vormontiert und anschließend gemeinsam in die Verstellvorrichtung eingebaut werden.

Bei einer weiteren vorteilhaften Ausgestaltung ist zwischen dem Ventilkörper und dem Übertragungselement ein in axialer Richtung, d. h. in Richtung der Mittellängslinie, bewegbarer Schieber angeordnet.

In weiterer Ausgestaltung ist auf der dem Übertragungselement zugewandten Seite ein mittig auf dem Schieber ausgebildeter kegelartiger Vorsprung angeordnet, wobei dieser eine Rampe bildet, über die die trichterförmige Vertiefung im Übertragungselement geschoben wird, wenn das Übertragungselement in radialer Richtung verschoben wird. Der Schieber wird dabei in axialer Richtung verschoben und das Schließglied, welches durch den Druck in der Arbeitskammer gegen den Schieber gedrückt wird, wird vom Ventilsitz abgehoben

Der Grundkörper des Übertragungselements weist bei einer weiteren Variante elastische Vorsprünge auf, die sich in die gleiche Richtung, wie der Schaft erstrecken. Dadurch können mögliche Toleranzschwankungen der einzelnen Bauteile ausgeglichen werden.

Anhand der folgenden Figurenbeschreibung soll die Erfindung näher erläutert werden.

Es zeigen:
- Figur 1: eine stufenlos blockierbare Verstellvorrichtung im Schnitt
- Figur 2: die Blockiervorrichtung der in Figur 1 dargestellten Verstellvorrichtung im Detail
- Figur 3: eine zweite Ausführungsform der Blockiervorrichtung
- Figur 4: eine dritte Ausführungsform der Blockiervorrichtung
- Figur 5: eine vierte Ausführungsform der Blockiervorrichtung
- Figur 6: eine weitere Ausführungsform der Blockiervorrichtung
- Figur 7: eine alternative Ausführungsform eines der in den Figuren 1 bis 6 gezeigten Übertragungselements

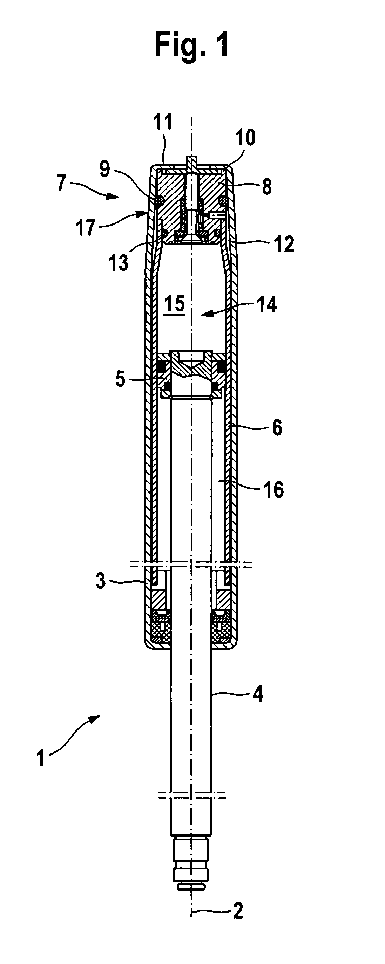

Die in Figur 1 im Schnitt dargestellte Verstellvorrichtung 1 umfasst ein zylinderförmiges, im Wesentlichen symmetrisch zu einer Mittellängsachse 2 ausgebildetes Gehäuse 3, mit einer das Gehäuse 3 an einer Seite durchdringenden Kolbenstange 4. Die Kolbenstange 4 trägt einen Kolben 5, der in einem Führungsrohr 6 geführt wird. Dem Kolben 5 gegenüberliegend, ist auf der der Kolbenstange 4 abgewandten Seite eine Blockiervorrichtung 7 im Gehäuse 3 fest angeordnet.

Die Blockiervorrichtung 7 umfasst einen Ventilkörper 8, der den Innenraum des Gehäuses 3 mit einer ersten Dichtung 9 gegen die Umgebung abdichtet. Der Ventilkörper 8 stützt sich in axialer Richtung zur Verstellvorrichtung 1 einerseits über einen Kragen 10 an dem der Kolbenstange 4 abgewandten Ende des Gehäuses 3 und zwar an einem umgelegten Bereich 11 des Gehäuses 3 und andererseits an dem Führungsrohr 6 ab.

Das Führungsrohr 6 stützt sich wiederum an einem Kolbenstangendichtungs- und - führungspaket ab und bildet zusammen mit dem Gehäuse 3 einen Ringraum 12, durch den in bekannter Weise das im Gehäuse 3 enthaltende Fluid strömen kann. Eine zweite Dichtung 13 ist zwischen dem Führungsrohr 6 und dem Ventilkörper 8 angeordnet, um den Ringraum 12 gegenüber einem sich innerhalb des Führungsrohres 6 befindlichen Arbeitsraumes 14, der durch den Kolben 5 in bekannter Weise in eine erste Arbeitskammer 15 und eine zweite Arbeitskammer 16 getrennt wird, abzudichten.

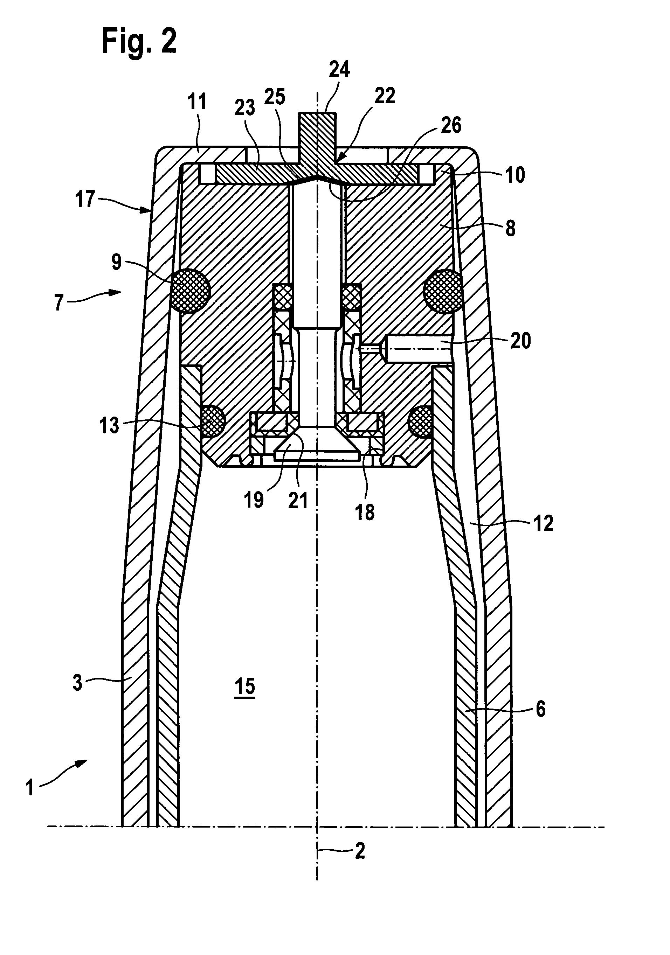

Das Gehäuse 3 weist in dem Bereich, in dem die Blockiervorrichtung 7 angeordnet ist, einen Konus 17 auf. Auf dem Konus 17 ist ein nicht dargestelltes, in der Höhe zu verstellendes Objekt, beispielsweise ein Sitzträger eines Stuhls oder eine Tischplatte, befestigt. An dem zu verstellenden Objekt ist ein ebenfalls nicht dargestelltes Auslösemittel angeordnet, mit dessen Hilfe die zu den Figuren 2 bis 6 im Detail beschriebene Blockiervorrichtung 7 der Verstellvorrichtung 1 betätigt wird.

Figur 2 zeigt eine detaillierte Darstellung, der in Figur 1 gezeigten erfindungsgemäßen Blockiervorrichtung 7, die zur optimalen Ausnutzung der Hublänge der Verstellvorrichtung 1 im Bereich des Konus 17 innerhalb des Gehäuses 3 angeordnet ist.

Durch den Ventilkörper 8 erstreckt sich eine mehrstufige axiale Bohrung 18, in der ein Schließglied 19 angeordnet ist. Von der axialen Bohrung 18 verläuft eine radiale Bohrung 20 in den Ringraum 12. Bei geöffnetem Schließglied 19 kann das Fluid aus der ersten Arbeitskammer 15 des Arbeitsraumes 14 über die beiden Bohrungen 18, 20 und dem Ringraum 12 in die zweite Arbeitskammer 16 (Figur 1) des Arbeitsraumes 14 oder umgekehrt strömen. Wenn die Auslösevorrichtung nicht betätigt wird, wird das Schließglied 19 aufgrund des Drucks in der ersten Arbeitskammer 15 gegen einen in der Bohrung 18 angeordneten Ventilsitz 21 gedrückt und die Verstellvorrichtung 1 lässt sich nicht verstellen.

Das Schließglied 19 steht in Wirkverbindung mit einem Übertragungselement 22, welches einen scheibenartigen Grundkörper 23 und einen an dem Grundkörper 23 angeordneten Schaft 24 umfasst. Das Übertragungselement 22 ist zwischen dem Ventilkörper 8 und dem umgelegten Bereich 11 des Gehäuses 3 angeordnet. Der Schaft 24 erstreckt sich über den umgelegten Bereich 11 aus dem Gehäuse 3 hinaus, um auf geeignete Weise von dem Auslösemittel des Sitzträgers oder Tisches ergriffen und in radialer Richtung bewegt werden zu können.

An der dem Schaft 24 entgegengesetzten Seite des Übertragungselements 22 ist eine trichterähnliche Vertiefung 25 angeordnet, in die das dem Ventilsitz 21 entgegengesetzte Ende des Schließglieds 19 mit einer der Vertiefung 25 entsprechenden kegelartigen Kontur 26 eingreift.

Mithilfe des nicht gezeigten Auslösemittels des Sitzträgers oder Tisches kann das Übertragungselement 22 radial verschoben werden, wobei ein bestimmter Bereich der trichterförmigen Vertiefung 25 einen bestimmten Bereich der kegelartigen Kontur 26 des Schließglieds 19 überstreicht und das Schließglied 19 derart bewegt wird, dass es vom Ventilsitz 21 abhebt, wodurch der Fluidenfluss und somit die stufenlose Verstellung der Verstellvorrichtung 1 ermöglicht wird.

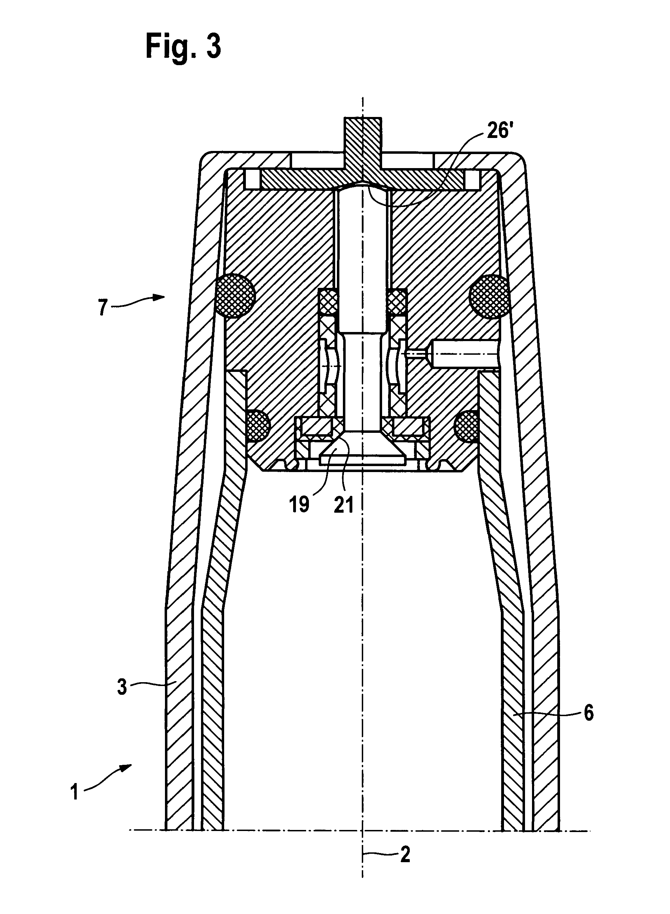

In Figur 3 wird eine alternative Ausführungsform der Blockiervorrichtung 7 gezeigt, die im Wesentlichen der in Figur 2 gezeigten entspricht, wobei sich die Blockiervorrichtung 7 dadurch unterscheidet, dass das dem Ventilsitz 21 entgegengesetzte Ende des Schließgliedes 19 eine sphärische Kontur 26' aufweist, wodurch eine andere Krafteinleitung erreicht wird.

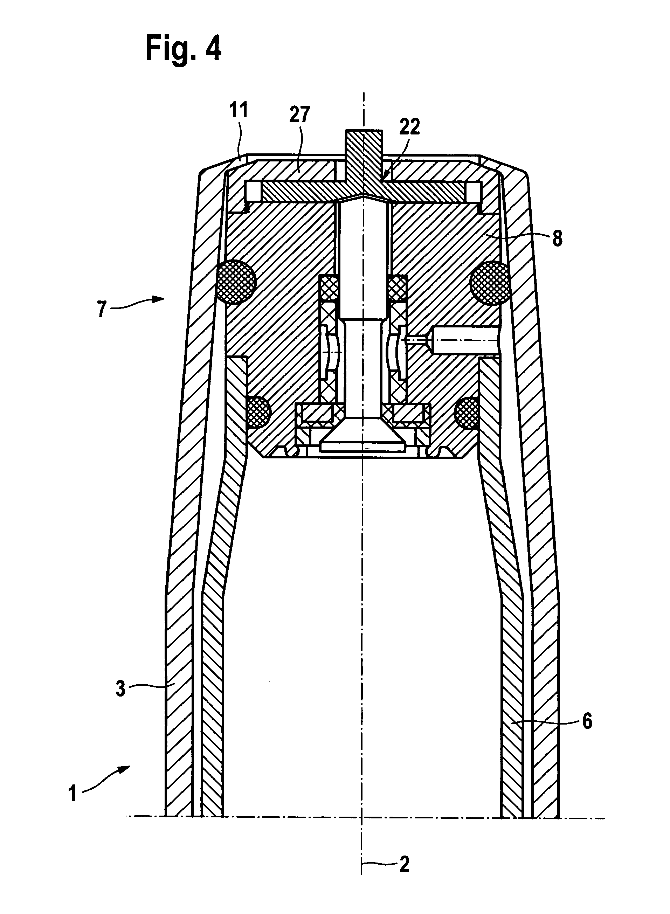

Die Figur 4 zeigt eine weitere Ausführungsform der Blockiervorrichtung 7, bei der das Übertragungselement 22 zwischen dem Ventilkörper 8 und einem Halteelement 27 angeordnet ist. Das Halteelement 27 wird auf der dem umgelegten Bereich 11 zugewandten Seite des Ventilkörpers 8 auf diesen aufgeschraubt und stützt sich an dem umgelegten Bereich 11 des Gehäuses 3 ab. Bei einer derartigen Anordnung, können der Ventilkörper 8 und das Übertragungselement 22 vormontiert und anschließend gemeinsam in die Verstellvorrichtung 1 eingebaut werden.

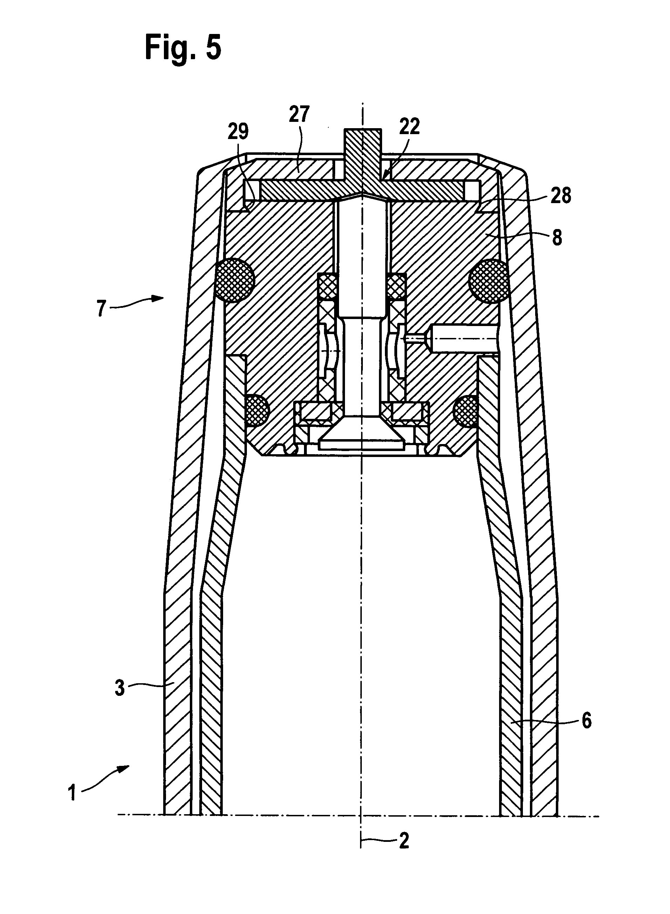

Die Figur 5 zeigt eine zu Figur 4 ähnliche Ausführungsform der Blockiervorrichtung 7, jedoch ist das Halteelement 27 mit Rastvorsprüngen 28 versehen, die in entsprechende Rastnuten 29 des Ventilkörpers 8 eingreifen. Somit wird durch einfaches Aufdrücken des Halteelements 27 auf den Ventilkörper 8 eine einfache Vormontage der Blockiervorrichtung 7 möglich.

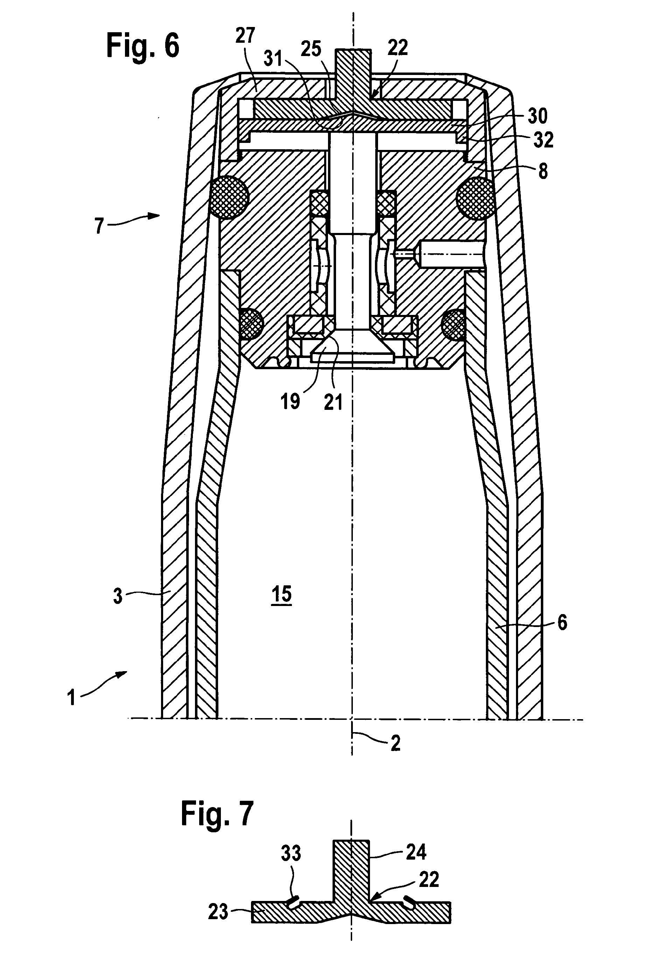

Die Figur 6 zeigt eine weitere Ausführungsform der Blockiervorrichtung 7, bei der zwischen dem Ventilkörper 8 und dem Übertragungselement 22 ein in axialer Richtung bewegbarer Schieber 30 angeordnet ist. Auf der dem Übertragungselement 22 zugewandten Seite ist ein konzentrisch auf dem Schieber 30 ausgebildeter kegelartiger Vorsprung 31 angeordnet, der eine Rampe bildet, über die die trichterförmige Vertiefung 25 im Übertragungselement 22 geschoben wird, wenn das Übertragungselement 22 in radialer Richtung verschoben wird. Dabei wird der Schieber 30 in axialer Richtung verschoben und das Schließglied 19, welches durch den Druck in der ersten Arbeitskammer 15 gegen den Schieber 30 gedrückt wird, wird vom Ventilsitz 21 abgehoben, wodurch das Fluid wieder von einer Arbeitskammer 15, 16 in die andere Arbeitskammer 16, 15 strömen kann.

Auf der dem Ventilkörper 8 zugewandten Seite weist der Schieber 30 einen am Umfangsbereich ausgebildeten Kragen 32 auf, der entlang der Innenseite des Halteelements 27 gleitet und ein Kippen des Schiebers 30 in eine undefinierte Stellung verhindert. Der Kragen 32 kann aber auch durch mehrere in Richtung Ventilkörper 8 ragende zahnähnliche Vorsprünge ersetzt werden.

Die Figur 7 zeigt eine alternative Ausführungsform des Übertragungselements 22, bei der der Grundkörper 23 elastische Vorsprünge 33 aufweist, die sich in die gleiche Richtung, wie der Schaft 24 erstrecken und mögliche Toleranzschwankungen der einzelnen Bauteile ausgleichen.

### Bezugszeichenliste

- 1: Verstellvorrichtung
- 2: Mittellängsachse
- 3: Gehäuse
- 4: Kolbenstange
- 5: Kolben
- 6: Führungsrohr
- 7: Blockiervorrichtung
- 8: Ventilkörper
- 9: erste Dichtung
- 10: Kragen
- 11: umgelegter Bereich
- 12: Ringraum
- 13: zweite Dichtung
- 14: Arbeitsraum
- 15: erste Arbeitskammer
- 16: zweite Arbeitskammer
- 17: Kon us
- 18: axiale Bohrung
- 19: Schließglied
- 20: radiale Bohrung
- 21: Ventilsitz
- 22: Übertragungselement
- 23: Grundkörper
- 24: Schaft
- 25: Vertiefung
- 26: kegelartige Kontur
- 27: Halteelement
- 28: Rastvorsprung
- 29: Rastnut
- 30: Schieber
- 31: kegelartiger Vorsprung
- 32: Kragen
- 32: Vorsprung

## Patentansprüche

1. Stufenlos blockierbare Verstellvorrichtung, insbesondere Gasfeder,
mit einem im Wesentlichen zylinderförmigen Gehäuse mit einer Mittellängsachse,
mit einer an einem Ende des Gehäuses abgedichtet herausgeführten, axial verschiebbar in dem Gehäuse angeordneten Kolbenstange, deren in das Gehäuse ragendes Ende fest mit einem in dem Gehäuse axial verschiebbaren Kolben verbunden ist, der das Gehäuse in eine erste und eine zweite Arbeitskammer unterteilt,
mit einem einen Ventilsitz und ein Schließglied umfassenden Ventilkörper, der mit einem Übertragungselement eine Blockiervorrichtung bildet, die bei Betätigung des Übertragungselements die erste Arbeitskammer mit der zweiten Arbeitskammer durch Abheben des Schließgliedes von dem Ventilsitz verbindet,
**dadurch gekennzeichnet , dass** das Übertragungselement (22) quer zur Mittelängslachse (2) des Gehäuses (3) verschiebbar gelagert ist.

2. Stufenlos blockierbare Verstellvorrichtung nach Anspruch 1, **dadurch gekennzeichnet , dass** das Übertragungselement (22) einen scheibenartigen Grundkörper (23) und einen an dem Grundkörper (23) angeordneten Schaft (24) umfasst.

3. Stufenlos blockierbare Verstellvorrichtung nach einem der Ansprüche 1 oder 2,
**dadurch gekennzeichnet, dass** an der dem Schaft (24) entgegengesetzten Seite des Übertragungselements (22) eine Vertiefung (25) angeordnet ist, in die das dem Ventilsitz (21) entgegengesetzte Ende des Schließglieds (19) mit einer der Vertiefung (25) entsprechenden kegelartigen Kontur (26) eingreift.

4. Stufenlos blockierbare Verstellvorrichtung nach einem der Ansprüche 1 bis 3,
**dadurch gekennzeichnet , dass** das dem Ventilsitz (21) entgegengesetzte Ende des Schließgliedes (19) eine sphärische Kontur (26') aufweist

5. Stufenlos blockierbare Verstellvorrichtung nach einem der Ansprüche 1 bis 4,
**dadurch gekennzeichnet , dass** das Übertragungselement (22) zwischen dem Ventilkörper (8) und einem Halteelement (27) angeordnet ist.

6. Stufenlos blockierbare Verstellvorrichtung nach Anspruch 5, **dadurch gekennzeichnet , dass** jeweils das Halteelement (27) auf der dem Ende des Gehäuses (3) abgewandten Seite und der Ventilkörper (8) auf der der ersten Arbeitskammer (15) abgewandten Seite ein Gewinde aufweisen und das Halteelement (27) auf den Ventilkörper (8) aufgeschraubt ist.

7. Stufenlos blockierbare Verstellvorrichtung nach Anspruch 5, **dadurch gekennzeichnet, dass** das Halteelement (27) auf der dem Ende des Gehäuses (3) abgewandten Seite mit Rastvorsprüngen (28) versehen ist, die in entsprechende Rastnuten (29) des Ventilkörpers (8), die auf der der ersten Arbeitskammer (15) abgewandten Seite angeordnet sind, eingreifen.

8. Stufenlos blockierbare Verstellvorrichtung nach einem der vorhergehenden Ansprüche, **dadurch gekennzeichnet, dass** zwischen dem Ventilkörper (8) und dem Übertragungselement (22) ein in axialer Richtung bewegbarer Schieber (30) angeordnet ist.

9. Stufenlos blockierbare Verstellvorrichtung nach Anspruch 8, **dadurch gekennzeichnet, dass** auf der dem Übertragungselement (22) zugewandten Seite ein mittig auf dem Schieber (30) ausgebildeter kegelartiger Vorsprung (31) angeordnet ist.

10. Stufenlos blockierbare Verstellvorrichtung nach einem der vorhergehenden Ansprüche, **dadurch gekennzeichnet, dass** der Grundkörper (23) des Übertragungselements (22) elastische Vorsprünge (33) aufweist, die sich in die gleiche Richtung, wie der Schaft (24) erstrecken.
